(19) Europäisches Patentamt
European Patent Office
Office européen des brevets

(11) Numéro de publication: **0 162 733 B1**

(12) **FASCICULE DE BREVET EUROPEEN**

(45) Date de publication du fascicule du brevet: **18.01.89**

(51) Int. Cl.$^4$: **B 01 J 29/08**, C 10 G 47/16

(21) Numéro de dépôt: **85400536.0**

(22) Date de dépôt: **21.03.85**

(54) **Nouveau catalyseur d'hydrocraquage ou de craquage de charges hydrocarbonees.**

(30) Priorité: **30.03.84 FR 8403350**

(43) Date de publication de la demande:
**27.11.85 Bulletin 85/48**

(45) Mention de la délivrance du brevet:
**18.01.89 Bulletin 89/03**

(84) Etats contractants désignés:
**AT BE DE GB IT LU NL SE**

(56) Documents cités:
**EP-A-0 003 818**
**EP-A-0 028 938**
**FR-A-2 500 326**
**GB-A-2 114 594**
**US-A-3 945 943**
**US-A-4 419 271**

(73) Titulaire: **SOCIETE FRANCAISE DES PRODUITS POUR CATALYSE PRO-CATALYSE**
**c/o INSTITUT FRANCAIS DU PETROLE 4, avenue de Bois Préau**
**F-92502 Rueil Malmaison (FR)**

(72) Inventeur: **Dufresne, Pierre**
**67, rue Georges Sand**
**F-92500 Rueil Malmaison (FR)**
Inventeur: **Marcilly, Christian**
**91 ter, rue Condorcet**
**F-78800 Houilles (FR)**

**EP 0 162 733 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

La présente invention concerne un nouveau catalyseur de conversion de coupes pétrolières lourdes, comprenant comme constituant de base au moins une zéolithe acide du type Y spécialement modifiée.

L'hydrocraquage ou le craquage de coupes pétrolières lourdes sont des procédés très importants du raffinage qui permettent de produire, à partir de charges lourdes excédentaires et peu valorisables, les fractions plus légères telles que essences, carburéacteurs et gazoles légers que recherche le raffineur pour adapter sa production à la structure de la demande. Par rapport au craquage catalytique, l'intérêt de l'hydrocraquage catalytique est de fournir des distillats moyens, carburéacteurs et gazoles, de très bonne qualité. En revanche, l'essence produite présente un indice d'octane beaucoup plus faible que cells issue de craquage catalytique.

L'invention concerne un nouveau catalyseur renfermant notamment (a) une matrice et (b) une zéolithe particulière, ce catalyseur pouvant être utilisé soit dans les réactions d'hydrocraquage soit dans les réactions de craquages.

Les catalyseurs utilisés en hydrocraquage sont tous du type bifonctionnels associant une fonction acide à une fonction hydrogénante. La fonction acide est apportée par des supports de grandes surfaces (150 à 800 $m^2 \cdot g^{-1}$ environ) présentant une acidité superficielle, tels que les alumines halogénés (chlorées ou fluorées notamment), les combinaisons d'oxydes de bore et d'aluminium, les silice-alumines amorphes et les zéolithes. La fonction hydrogénante est apportée soit par un ou plusieurs métaux de groupe VIII de la classification périodique des éléments, tels que le nickel, le palladium ou le platine par exemple, soit par une association d'au moins deux métaux choisis parmi les groupes VI de la classification périodique, molybdène et tungstène notamment, et VIII de la même classification, cobalt et nickel notamment, deux au moins de métaux de cette association appartenant à deux groupes différents (VI et VIII précédemment cités).

L'équilibre entre les deux fonctions acide et hydrogénate est le paramètre fondamental qui régit l'activité et la sélectivité du catalyseur. Une fonction acide faible et une fonction hydrogénante forte donnent des catalyseurs peu actifs, travaillant à température en général élevée (≥390°C environ), et à vitesse spatiale d'alimentation faible (la VVH exprimée en volume de charge traitée par unité de volume de catalyseur et par heure est généralement inférieure ou égale à 2, mais dotés d'une très bonne sélectivité en distillats moyens. Inversement, une fonction acide forte et une fonction hydrogénante faible donnent des catalyseurs très actifs mais présentant une mauvause sélectivité en distillats moyens.

Ainsi, c'est un des grands intérêts de l'hydrocraquage de présenter une grande flexibilité à divers niveaux: flexibilité, au niveau des types de catalyseur utilisés, qui amène une flexibilité au niveau des charges traitées et au niveau des produits obtenus. Un paramètre aisé à maîtriser est l'acidité du support du catalyseur.

Dans les supports peu acides, ou trouve la famille des silicealumines amorphes. Beaucoup de catalyseurs du marché de l'hydrocraquage sont constitués de silice-alumine associée, soit à un métal du groupe VIII soit, de préférence quand les teneurs en poisons hétéroatomiques de la charge à traiter dépassent 0,5% poids, à une association des sulfures des métaux des groupes VI B et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe, et comme on l'a dit, leur faible activité.

Les zéolithes, acides présentent l'avantage par rapport aux autres support acides précédemment cités, d'apporter une acidité beaucoup plus élevée. Les catalyseur nouveaux qui les contiennent sont donc beaucoup plus actifs et pour cette raison, permettent de travailler à température plus basse et/ou à vitesse spatiale d'alimentation VVH plus élevée. En revanche, cette acidité plus élevée modifie l'équilibre entre les deux fonctions catalytiques, acide et hydrogénate. Il en résulte une modification de sélectivité notable de ces catalyseurs par rapport aux catalyseurs conventionnels: ils sont plus craquants et produisent par conséquent beaucoup plus d'essence que des distillats moyens.

La présente invention concerne un nouveau type de catalyseur contenant 2 à 80% en poids, de préférence 3 à 50% d'une zéolithe dont les caractéristiques physiques et l'acidité ont été spécialement modifiées, et qui présente une activité et une sélectivité en distillats moyens notablement améliorées par rapport aux autres systèmes de l'art antérieur à base de zéolithes.

La zéolithe utilisée dans le catalyseur de la présente invention est une zéolithe acide HY caractérisée par différentes spécifications, dont les méthodes de détermination seront précisées dans la suite du texte; un rapport molaire $SiO_2/Al_2O_3$ compris entre 8 et 70 et de manière préférée entre 12 et 40; une teneur en sodium inférieure à 0,15% poids déterminée sur la zéolithe calcinée à 1100°C; un paramètre cristallins $a_0$ de la maille élémentaire compris entre $24{,}55 \times 10^{-10}$m et $24{,}24 \times 10^{-10}$ m et de manière préférée entre $24{,}38 \times 10^{-10}$ m et $24{,}26 \times 10^{-10}$m; une capacité $C_{Na}$ de reprise en ions sodium, exprimée en gramme de Na par 100 grammes de zéolithe modifiée, neutralisée puis calcinée, supérieure à environ 0,85 (la capacité $C_{Na}$ de reprise en ions sodium sera définie de manière plus précise au paragraphe suivant); une surface spécifique déterminée par la méthode B.E.T. supérieure à environ 400 $m^2 \cdot g^{-1}$ et de préférence supérieure à 550 $m^2/g$, une capacité d'adsorption de vapeur d'eau à 25°C pour une pression partielle de 2,6 torrs, (346,6 Pa) superieure à 6%, une répartition poreuse comprenant entre 1 et 20% et de préférence entre 3 et 15% du

volume poreux contenu dans des pores de diamètre situé entre 20 et 80 Å (20 et $80\times10^{-10}$m) le reste du volume poreux étant contenu dans les pores de diamètre inférieur à $20\times10^{-10}$m.

Les différentes caractéristiques sont mesurées sur des méthodes précisées ci-après:

le rapport molaire $SiO_2/Al_2O$ est mesuré par analyse chimique. Quand les quantités d'aluminium deviennent faibles, par exemple inférieures à 2%, pour plus de précision, il est opportun d'utiliser une méthode de dosage par spectrométrie d'adsorption atomique.

le paramètre de maille est calculé à partir du diagramme de diffraction aux rayons X, selon la méthode décrite dans la fiche ASTM D 3.942-80. Il est clair que pour effectuer ce calcul correctement, il faut que le cristallinité du produit soit suffisante.

la surface spécifique est déterminée par mesure de l'isotherme d'adsorption d'azote à la température de l'azote liquide et calculée selon la méthode classique B.E.T. Les échantillons sont prétraités, avant la mesure, à 500°C sous balayage d'azote sec.

la distribution poreuse est déterminée par la méthode B.J.H. décrite par Barrett, Joyner et Halenda dans Journal of American Chemical Society, volume 73, page 373—1951. Cette méthode est basée sur l'exploitation numérique de l'isotherme de désorption d'azote. La mesure est effectuée avec un appareil Carlo Erba type Sorptomatic Série 1800. Les résultats sont exprimés par les valeurs du volume poreux V en fonction du diamètre des pores D; la courbe dérivée est également présentée:

$$\frac{dV}{dD}$$

en fonction de D. Le volume poreux total est défini ici comme le volume d'azote adsorbé à saturation, plus exactement à une pression partielle correspondant à un rapport entre la pression partielle et la pression de vapeur saturante P/Po égal à 0,99.

les pourcentages de reprise en eau (ou capacité d'adsorption de vapeur d'eau) sont déterminés à l'aide d'un appareillage classique de gravimétrie. L'échantillon est prétraité à 400°C sous vide primaire puis porté à une température stable de *25°C*. On admet ensuite une pression d'eau de 346,6 Pa, ce qui correspond à un rapport P/Po d'environ 0,10 (rapport entre la pression partielle d'eau admise dans l'appareil et la pression de vapeur saturante de l'eau à la température de 25°C).

la capacité d'échange des ions sodium $C_{Na}$ (ou capacité de reprise en ions sodium) est déterminée de la manière suivante: un gramme de zéolithe est soumis à trois échanges successifs dans 100 $cm^3$ de solution 0,2 M de NaCl, pendant une heure à 20°C sous bonne agitation. Les solutions sont laissées à pH naturel pendant l'échange. En effet si le pH était réajusté à des valeurs proches de 7, par addition de petites quantités de soude, les taux de sodium échangé seraient supérieurs. Elle est exprimée en gramme de sodium par 100 grammes de zéolithe modifiée, rééchangée puis calcinée à 1100°C.

On a découvert dans la présente invention que les zéolithes Y stabilisées répondant aux spécifications précités avaient des propriétés remarquables.

Ces zéolithes sont fabriquées, généralement à partir d'une zéolithe Y-Na, par une combinaison appropriée de deux traitements de base: (a) un traitement hydrothermique qui associe température et pression partielle de vapeur d'eau, et (b) ou traitement acide par, de préférence, un acide minéral fort et concentré.

Généralement la zéolithe Y-Na à partir de laquelle on prépare le zéolithe selon l'invention possède un rapport molaire $SiO_2/Al_2O_3$ compris entre 4 et 6; il conviendra au préalable d'en abaisser la teneur en sodium (poids) à une valeur de l'ordre de 1 à 3% et de préférence à moins de 2,5%; la zéolithe Y-Na possède en outre généralement une surface spécifique comprise entre 750 et 950 $m^2/g$.

Plusieurs variantes de préparation existent qui toutes font suivre le traitement hydrothermique de la zéolithe par un traitement acide. Les traitements hydrothermiques sont des opérations connues de l'art antérieur et permettant d'obtenir des zéolithes dites stabilisées ou encore ultra-stabilisées. Ainsi Mac Daniel et Maher ont-ils revendiqué dans le brevet US—A—3.293.192 l'obtention de zéolithe Y dites ultrastables caractérisées par un paramètre cristalline de 24,45 à 24,2 et de faibles pourcentages de sodium, grâce à l'association de traitements hydrothermiques et d'échanges cationiques par des solutions de sels d'ammonium. Kerr et al ont également obtenu des zéolithes Y enrichies en silice par extraction sélective de l'aluminium grâce à une agent chélatant tel que l'éthylène diamine tétraacétique (US—A—3.442.795).

Eberly et al ont combiné ces deux dernières techniques pour l'obtention de zéolithes désaluminées (US—A—3,506,400 et US—A—3.591.488). Ils montrent que le traitement hydrothermique consist à extraire sélectivement les aluminium tétracoordinés de la charpente aluminosilicatée. Ils revendiquent cette procédure ainsi que le traitement ultérieur par des solutions contenant différentes cations. Un exemple est donné avec une extraction ultérieure par HCl 0,1 N aboutissant à une faujasite ne contenant plus d'aluminium.

Ward décrit la fabrication de catalyseurs zéolithiques destinés à la fabrication de distillats moyens (USP 3.853.742). La zéolithe est stabilisée mais n'est pas soumise à une attaque acide à la fin de la série de traitements, et son paramètre cristallin est compris entre $24,40\times10^{-10}$m et $24,50\times10^{-10}$. Bezman et Rabo ont utilisé comme base de catalyseur d'hydrocraquage des zéolithes plus fortement stabilisées, dont le paramètre cristallin varie de $24,20\times10^{-10}$m à $24,45\times10^{-10}$m (EP—A—0028938). Ce type de zéolithe est plus

particulèrement caractérisé par une capacité d'échange ionique "IEC" inférieure à 0,07. La capacité d'échange est définie dans ce brevet comme:

IEC: (Ion Exchange Capacity)

$$IEC=k\frac{[Na_2O]\ mol}{[SiO_2]\ mol}$$

k étant le rapport molaire $SiO_2/Al_2O_3$ déterminé avant le rétroéchange aux ions $Na^+$. Une zéolithe de rapport molaire $SiO_2/Al_2O_3$ égal à k, et d'IEC égal à 0,07 répond à la formule approximative:

$$H_{0,93}\ Na_{0,07}\ AlO_2\ (SiO_2)_{k/2}$$

La capacité de reprise en ions sodium d'un tel produit, exprimée en g par 100 g, est:

$$C_{Na}=\frac{23\times 0,07}{(23\times 0,07)+0,93+59+(60\times k/2)}\times 100$$

Lorsque k=4,8, $C_{Na}=0,78$

Lorsque k=10, $C_{Na}=0,45$

Donc pour une valeur d'IEC inférieure ou égale à 0,07, la capacité de reprise en ion sodium $C_{Na}$ est dans tous les cas inférieure à 0,8, (k est supérieur à 4,8 pour une zéolithe Y stabilisée).

La zéolithe ultra-stabilisée selon la méthode de Bezman et Rabo et également caractérisée par un caractère hydrophobe, telle que sa capacité d'adsorption d'eau à 25°C et une valeur de P/Po de 0,1 soit inférieure à 5%.

Scherzer (Journal of Catalysis *54*, 285, 1978) synthétise par une combinaison de traitements hydrothermiques et acides, et caractérise par diffraction des rayons X des zéolithes très enrichies en silice (rapport molaire $SiO_2/Al_2O_3>100$). A la même époque, V. Bosacek et al réalisent également des traitements similaires pour obtenir une zéolithe ultra-stable de rapport $SiO_2/Al_2O_3$ de l'ordre de 75.

Ces produits sont trop fortement désaluminés et pour cette raison, leur intérêt pour l'hydrocraquage est douteux. En effet il faut maintenir un minimum d'atomes d'aluminium dans la structure pour garder une acidité suffisante nécessaire du catalyseur d'hydrocraquage.

Le brevet belge BE—A—895.873 indique la possibilité de réaliser l'hydrocraquage en vue de produire des distillats moyens grâce à un catalyser contenant des zéolithes Y traitées à la vapeur d'eau puis lixiviées. Cette zéolithe ultra-stabilisée est caractérisée par différents paramètres notamment un rapport molaire $SiO_2/Al_2O_3$ supérieur à 10, un paramètre cristallin inférieure à $24,4\times 10^{-10}$m, une distribution mésoporeuse particulière. La porosité d'une zéolithe Y, non traitée à la vapeur d'eau et par un acide est totalement comprise dans des pores de diamètre inférieure à $20\times 10^{-10}$m.

Les traitements d'ultra-stabilisation modifient cette répartition tion. Dans ce brevet belge BE—A—895.873, les traitements décrits créent une mésoporosité centrée sur environ $80\times 10^{-10}$m pour une zéolithe traitée à la vapeur d'eau et à environ $135\times 10^{-10}$m pour la même zéolithe soumise ultérieurement à un traitement acide.

On a maintenant constaté que les zéolithes préférées comme composants des catalyseurs d'hydrocraquage destiné à produire des distillats moyens doivent avoir une acidité moyenne, c'est-à-dire un rapport molaire $SiO_2/Al_2O_3$ compris entre 8 et 70 et de préférence 12 et 40. Une cristallinité conservée au moins à hauteur de 45%, ce qui correspond à une surface spécifique de 400 $m^2/g$, et de préférence 60%, ce qui correspond à une surface spécifigue de 550 $m^2/g$, une répartition poreuse comprenant entre 1 et 20% en de préférence entre 3 et 15% du volume poreux contenu dans des pores de diamètre situé entre 20 et $80\times 10^{-10}$m, le reste du volume poreux étant contenu essentiellement dans des pores de diamètre inférieure à $20\times 10^{-10}$m.

La création de microporosité secondaire vers des diamètres de pore compris entre 20 et $80\times 10^{-10}$m, ainsi que l'absence de mésoporosité au-delà de $80\times 10^{-10}$m est une caractéristique de l'invention.

On a en effet constaté que les catalyseurs ainsi préparés donnent des résultats supérieurs en hydrocraquage de coupes lourdes pour produire des distillats moyens.

Sans pourvoir préjuger de toutes les raisons fondamentales qui conduisent aux propriétés remarquables de ces produits, on peut avancer quelques hypothèses.

La modification de ces zéolithes doit se faire en ménageant plusieurs exigences contradictoires: une augmentation du rapport $SiO_2/Al_2O_3$, une création de microporosité secondaire, une conservation de la cristallinité. L'augmentation du rapport $SiO_2/Al_2O_3$ impique un profond remodelage de la structure qui doit s'effectuer dans des conditions expérimentales bien définies, sous peine de destruction partielle ou totale du réseau cristallin. Il faut conserver une bonne cristallinité à la zéolithe, c'est-à-dire garder un réseau

tridimensionnel organisé d'atomes de silicium, dans lesquelles subsistent quelques atomes d'aluminium avec leurs protons associés. Mais à l'intérieur de cette charpente tridimensionnelle microporeuse, il faut de plus ménager une microporosité secondaire qui permettre de faciliter les processus de diffusion et d'accessibilité des molécules lourdes aux sites acides. Les charges d'hydrocraquage traitées par ce type de catalyseur sont des coupes de point d'ébullition initial généralement supéieur à 350°C environ, et donc généralement le nombre moyen d'atomes de carbone d'une molécule représentative est situé entre 20 et 40; l'encombrement de ces molécules est important et les limitations diffusionnelles sont préjudiciables à l'activité du catalyseur. Il est donc avantageux de créer une microporosité secondaire dans la zéolithe qui permette de faciliter les processus de diffusion et d'accessibilité aux sites acides. Dans le mécanisme bifonctionnel de l'hydrocraquage il est important aussi que les transferts moléculaires entre les sites acides et les sites hydrogénants soient rapides. En effet les produits deshydrogénés comme les oléfines, produits de désorption des carbocations, émanant des sites acides, doivent pouvoir être hydrogénés rapidement sous peine de subir d'autres transformations sur un autre site acide. Cet produits sont en effet très réactifs, et après réadsorption ils peuvent soit se recraquer, soit se combiner avec d'autres molécules et donner des polycondensations. Ces deux phénomènes sont tous les deux préjudiciables au bon fonctionnement du catalyseur, le premier conduit au surcraquage et dégrade la sélectivité en distillats moyens au profit de la production d'essence voire de gaz; le second conduit à la formation de coke et dégrade la stabilité du catalyseur. On voit donc l'importance de faciliter les étapes de diffusion dans le catalyseur. Nous avons cependant constaté que cette microporosité secondaire devait être crée par des pores dont le diamètre ne devait pas excéder $80\times10^{-10}$m sous peine d'affecter la cristallinité de la zéolithe.

Cette zéolithe est mise en forme dans une matrice qui peut être une alumine, laquelle contient des mésopores. On a donc globalement un catalyseur qui a une microporosité primaire inférieure à $20\times10^{-10}$m due à la charpente cristalline de la zéolithe, une *mi*croporosité secondaire comprise entre 20 et $80\times10^{-10}$m, due à des défauts cristallins dans le réseau de la zéolithe, et enfin, une *mé*soporosité due à la matrice avec laquelle la zéolithe est mélangée.

Ce type de zéolithes ultra-stables est obtenu par une combinaison de traitements hydrothermiques et de traitements en phase aqueuse en prenant les deux précautions suivantes:

les traitements hydrothermiques de stabilisation doivent être effectués dans des conditions relativement plus douces que les procédures classiques de l'art antérieur qui permettent d'arriver aux zéolithes dites ultra-stabilisées, telles que celles décrites par Mac Daniel et Maher (US—A—3.293.192), ou Bezman et Rabo (EP—A—0028938), afin que le rapport Si/Al de la charpente aluminosilicatée ne soit pas trop élevé. Un traitement hydrothermique est parfaitement défini par la conjonction de trois variables opératoires, qui sont: température, temps, pression partielle de vapeur d'eau. La teneur en ions sodium du produit de départ est également importante dans la mesure ou ceux-ci bloquent partiellement le processus de désalumination et favorisent la destruction du réseau. Les conditions optimum du traitement hydrothermique seront précisées plus loin.

La préparation de la zéolithe doit se terminer par un traitement en milieu acide. On a constaté que cette dernière étape avait une influence importante sur l'activité et la sélectivité d'un catalyseur d'hydrocraquage constitué d'une zéolithe Y ainsi modifiée, d'une matrice et d'une fonction hydrogénante.

Ce traitement acide de la zéolithe stabilisée a des conséquences importantes sur les propriétés physico-chimiques de la zéolithe. Il modifie la surface spécifique (mesurée par la méthode BET) de la zéolithe. La surface d'une zéolithe NaY non modifiée est comprise entre 750 et 950 $m^2/g$ et plus couramment entre 800 et 900 $m^2/g$ et celle d'une zéolithe Y stabilisée de paramètre cristallin inférieur à $24{,}50\times10^{-10}$m est couramment comprise entre 350 et 750 $m^2/g$, selon la sévérité du traitement hydrothermique adopté. Après extraction acide, la surface remonte de 100 voire 250 $m^2/g$ selon le type de traitement, ce qui fait passer la valeur de la surface entre 450 et 900 $m^2/g$. Ce résultat montre que la structure a ainsi été partiellement ou totalement dégagée d'espèces aluminiques encombrant les canaux, et bouchant partiellement la microporosité. Ce traitement augmente légèrement les propriétés d'adsorption d'eau des zéolithes ainsi préparées. Il diminue également de manière substantielle le paramètre cristalline de la maille. La baisse due à ce traitement se situe entre 0,04 et 0,4%, plus généralement entre 0,1 et 0,3%. Enfin il permet d'augmenter la microporosité secondaire située entre $20\times10^{-10}$m et $80\times10^{-10}$m de diamètre poreux. Les conditions optimum du traitement acide seront indiquées ci-après.

Un catalyseur d'hydrocraquage, contenant une zéolithe ainsi préparée, testé avec un résidu sous vide hydrotraité ou une autre charge lourde classique de l'hydrocraquage est beaucoup plus actif et sélectif en distillats moyens qu'un catalyseur de l'art antérieur contenant une zéolithe stabilisée. Sans préjuger des raisons de cette amélioration, on peut dire que le type de traitement adopté à modifié la nature et la force de la fonction acide du catalyseur ainsi que l'accessibilité du site aux molécules lourdes hydrocarbonées, lesquelles comprennent typiquement 20 à 40 atomes de carbone.

La zéolithe dont les caractéristiques satisfont aux critéres définis précédemment est dispersée dans une matrice généralement amorphe à base d'alumine, de silice, de silice-alumine, d'alumine-oxyde de bore, de magnésie, de silice-magnésie, de zircone, d'oxyde de titane ou à base d'une combinaison de deux au moins des oxydes précédentes, ou encore à base d'une argile, ou d'une combinaison des oxydes précédents avec de l'argile. Cette matrice a essentiellement pour rôle d'aider à mettre en forme la zéolithe, autrement dit à la produire sous forme d'agglomérats, billes, extrudés, pastilles etc., qui pourront être

placés dans un réacteur industriel. La proportion de matrice dans le catalyseur est de 20 à 98% en poids et de préférence 50 à 95%.

Le composant d'hydro-deshydrogénation du catalyseur de la présente invention est par exemple un composé d'un métal du groupe VIII de la classification périodique des éléments (notamment le nickel, le palladium ou le platine), ou une combinaison d'au moins deux des composés précédents, ou une combinaison de composés de métaux (oxydes notamment) des groupes VI (molybdène et/ou tungstène notamment) et des métaux non nobles du groupe VIII (Cobalt et/ou Nickel notamment) de la classification périodique des éléments.

Le catalyseur final doit comprendre entre 2 et 80% poids de zéolithe spécialement modifiée, et de préférence entre 3 et 50%. Les concentrations des composés métalliques, exprimées en poids de métal sont les suivantes: 0,01 à 5% poids de métaux du groupe VIII, et de préférence entre 0,03 et 3% poids, dans le cas où il s'agit uniquement de métaux nobles du type palladium ou platine, 0,01 à 15% poids de métaux du groupe VIII, et de préférence entre 0,05 à 10% poids, dans le cas où il s'agit de métaux non nobles du groupe VIII du type nickel par exemple; lorsqu'on utilise à la fois au moins un métal ou composé de métal du groupe VIII et au moins un composé d'un métal du groupe VI, en emploie 5 à 40% en poids d'une combinaison d'au moins un composé (oxyde notamment) d'un métal du groupe VI (molybdène ou tungstène notamment) et d'au moins un métal ou composé de métal du groupe VIII (cobalt ou nickel notamment) et de préférence 12 à 30%, avec un rapport pondéral (exprimé en oxydes métalliques) métaux du groupe VIII sur métaux du groupe VI compris entre 0,05 et 0,8 et de préférence entre 0,13 et 0,5.

Différentes méthodes de préparation peuvent être envisagées selon le type de produit désiré. Il y a deux variantes principales qui différent par le nombre de traitements hydrothermiques nécessaires. Pour des produits moyennement à fortement stabilisés, c'est-à-dire moyennement à fortement désaluminés au niveau de la charpente aluminosilicatée, un seul traitement peut suffire; pour des produits très fortement stabilisés, deux traitements s'avèrent nécessaires. L'art antérieur utilise couramment les valeurs de paramètre cristallin pour situer le niveau de stabilisation.

Pour obtenir des produits dont le paramètre cristallin mesuré en fin de chaîne de préparation est situé entre $24,24 \times 10^{-10}$m et $24,55 \times 10^{-10}$m (moyennement à fortement stabilisée), il est avantageux économiquement de n'opérer qu'un seul traitement hydrothermique. La zéolithe NaY de départ a classiquement un rapport molaire $SiO_2/Al_2O_3$ compris entre 4 et 6 et un paramètre cristallin compris entre $24,60 \times 10^{-10}$m et $24,80 \times 10^{-10}$m et plus généralement entre $24,65 \times 10^{-10}$m et $24,75 \times 10^{-10}$m. Avant d'effectuer le traitement hydrothermique il faut abaisser le taux de sodium à moins de 3% poids et de préférence moins de 2,5% poids. Ceci s'effectue classiquement par des échanges répétés dans des solutions d'un sel d'ammonium ionisable, tel que le nitrate, le chlorure, le sulfate ou équivalents. La zéolithe $NH_4$ NaY ainsi obtenue peut être maintenant calcinée dans les conditions suivantes: température comprise entre environ 500 et 850°C et de préférence entre 600 et 800°C, pression, partielle de vapeur d'eau comprise entre environ 0,05 et 10 bar et de préférence entre 0,1 et 5 bar, temps d'au moins 20 minutes et de préférence supérieure à une heure.

La zéolithe ainsi stabilisée est traitée par une solution diluée d'un acide organique ou inorganique, tel les acides chlorhydrique, nitrique, sulfurique, phosphorique, acétique, oxalique, formique ou équivalents, ou par un agent complexant.

Pour obtenir des zéolithes de paramètre allant de $24,24 \times 10^{-10}$m à $24,55 \times 10^{-10}$m, il est possible de recourir à deux étapes de traitement hydrothermique. La première s'effectue dans des conditions qui peuvent être très douces sur un produit dont le taux de sodium peut être relativement élevé, et toujours inférieur à 3,0% et de préférence de 2,8% à une température comprise entre 500 et 700°C, avec une pression partielle minimale de vapeur d'eau de 20 torrs (0,026 bar) et un temps d'au moins 20 minutes et si possible supérieur à une heure. Le produit subit ensuite un ou plusieurs échanges dans des solutions d'un sel d'ammonium ionisable, ou encore dans des solutions d'un acide organique ou inorganique, à condition toutefois que le pH de la solution finale ne soit pas inférieur à 0,5. Il est aussi possible d'utiliser une combinaison de ces deux types d'échange ou de mélanger l'acide à une solution de sels d'ammonium. Le taux de sodium est alors inférieur à *1%* et de préférence à *0,7%*. Intervient ensuite un deuxième traitement hydrothermique effectué dans des conditions plus sévères que le premier, à savoir une température comprise entre 600 et 880°C et de préférence entre 660 et 830°C, (la température de deuxième traitement hydrothermique étant supérieure de 100 à 250°C et de préférence 160 à 230°C à la température du premier traitement), une pression partielle de vapeur d'eau comprise entre 0,05 et 10 bar et de préférence entre 0,1 et 5 bar et un temps d'au moins 30 minutes et de préférence supérieure à une heure.

Le ou les traitements hydrothermiques sont suivis de un ou plusieurs traitements extractifs dans des solutions d'un acide organique ou inorganique, tels les acides chlorhydriques, nitrique, sulfurique, perchlorique, phosphorique, acétique, oxalique, formique ou équivalents. Il est également possible d'utiliser des agents complexants connus de l'art antérieur, tels que éthylène diamine tétraacétique, acétyl acétone ou équivalents. Cependant les traitements préférés s'effectuent avec des solutions d'acide chlorhydrique ou nitrique, de normalité comprise entre 0,1 et 11 N de manière préférée entre 0,5 et 3N. Pour ménager la cristallinité de la zéolithe il peut être avantageux de procéder à plusieurs attaques successives *douces* c'est-à-dire dans des solutions d'acide de faible normalité, plutôt qu'une seule attaque dans des conditions plus *sévères* c'est-à-dire dans un acide concentré, afin d'enlever des quantités équivalentes d'aluminium et de sodium; les traitements acides ainsi décrits peuvent toujours être suivis ou

précédés de un ou plusieurs échanges classiques avec des sels d'ammonium en vue de réduire davantage la teneur en sodium de la zéolithe final. Cet échange ionique peut sans inconvénient être réalisé simultanément à l'attaque acide en ajoutant l'acide à lá solution aqueuse de sel d'ammonium. Il est également possible après ces traitements acides de procéder à des échanges avec des cations des métaux du groupe II A, avec des cations de terres rares, ou encore des cations du chrome et du zinc, ou avec tout autre élément utile à améliorer le catalyseur.

La zéolithe HY ou $NH_4Y$ ainsi obtenue peut être introduite à ce stade, dans une des matrices amorphes citées précédemment. Une des méthodes préférées dans la présente invention consiste à malaxer la zéolithe dans un gel humide d'alumine pendant quelques dizaines de minutes, puis à passer la pâte ainsi obtenue à travers une filière pour former des extrudés de diamètre compris entre 0,4 et 4 mm.

La fonction hydrogénante telle qu'elle a été définie précédemment (métaux du groupe VIII ou association d'oxydes de métaux des groupes VI et VIII) peut être introduite dans le catalyseur à divers niveaux de la préparation et de diverses manières.

Elle peut être introduite en partie seulement (cas des associations d'oxydes de métaux des groupes VI et VIII) ou en totalité au moment du malaxage de la zéolithe avec le gel d'oxyde choisi comme matrice. Elle peut être introduite par une ou plusieurs opérations d'échange ionique sur le support calciné constitué de la zéolithe HY dispersée dans la matrice choisie, à l'aide de solutions contenant les sels précurseurs des mètaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (Co et/ou Ni notamment) lorsque les précurseurs des oxydes des métaux du groupe VI (Mo et/ou W) ont été préalablement introduits au moment du malaxage du support. Elle peut enfin être introduire par une ou plusieurs opérations d'imprégnation du support calciné constitué de zéolithe HY et de la matrice, par des solutions contenant les précurseurs des oxydes de métaux des groupes VI et/ou VIII, les précurseurs des oxydes des métaux du groupe VIII étant de préférence introduits après ceux du groupe VI ou en même temps que ces derniers. Les principaux sels précurseurs qui peuvent être utilisés sont par exemple:

pour le groupe VIII (cobalt ou nickel): nitrate, acétate, sulfate des cations bivalents hydratés ou des cations hexammines $Co(NH_3)_6^{2+}$ et $Ni(NH_3)_6^{2+}$

pour le groupe VI (Mo et W): les divers molybdates ou tungstates d'ammonium connus.

Dans le cas où les oxydes des métaux sont introduits en plusieurs imprégnations des sels précurseurs correspondants, une étape de calcination intermédiaire du catalyseur devra être effectuée à une température comprise entre 250 et 600°C.

L'imprégnation du molybdène peut être facilitée par ajout d'acide phosphorique dans les solutions de paramolybdate d'ammonium.

Les catalyseurs ainsi obtenus sont utilisés pour l'hydrocraquage de coupes lourdes, et présentent une activité améliorée par rapport à l'art antérieur, et ont de plus une sélectivité améliorée pour la production de distillats moyens des très bonne qualité.

Les charges employées dans ce procédé ou sont des gas-oil, des gas oils sous vide, des résidus désasphaltés ou hydrotraités ou équivalents. Elles sont constituées au moins à 80% en volume de composé dont les points d'ébullition sont situés entre 350 et 580°C. Elles contiennent des hétéroatomes, tels que soufre et azote. Les conditions de l'hydrocraquage telles que, température, pressions, taux de recyclage d'hydrogène, vitesse volumique horaire, devront être adaptées à la nature de la charge, caractérisée notamment par la gamme des points d'ébullition, la teneur en aromatiques ou polyaromatiques, la teneur en hétéroatomes. Les teneurs en azote sont comprises généralement entre 5 et 2000 ppm, et les teneurs en soufre entre 50 et 30.000 ppm.

La température est en général supérieure à 230°C et souvent comprise entre 300°C et 430°C. La pression est supérieure à 15 bar et en général supérieure à 30 bar. Le taux de recyclage d'hydrogène est au minimum de 100 et souvent compris entre 260 et 3000 litres d'hydrogène par litre de charge. La vitesse volumique horaire est comprise en général entre 0,2 et 10.

Les résultats qui importent au raffineur sont l'activité et la sélectivité en distillats moyens. Les objectifs fixés doivent être réalisés dans des conditions compatibles avec la réalité économique. Ainsi le raffineur cherche-t-il à diminuer la température, la pression, le taux de recyclage d'hydrogène et à maximiser la vitesse volumique hoaire. Il est connu que la conersion peut être augmentée par une élévation de température, mais c'est souvent au détriment de la sélectivité. La sélectivité en distillats moyens s'améliore avec une augmentation de la pression ou du taux de recyclage d'hydrogène, mais ceci au détriment de l'économie du procédé. Ce type de catalyseurs permet d'atteindre dans des conditions de marche classique des sélectivités en distillats de point d'ébullition compris entre 150 et 380°C supérieurs à 65%, et ceci pour des niveaux de conversion, en produits de point d'ébullition inférieure à 380, supérieurs à 55% en volume. Ce catalyseur présente de plus, dans ces conditions, une stabilité remarquable, ce qui est dû notamment à la haute surface spécifique du produit. Enfin, du fait de la composition du catalyseur et de la qualité de la zéolithe, le catalyseur est facilement régénérable.

On a également constaté dans la présente invention que les zéolithes décrites ci-dessus et préparées comme indiqué ci-dessus, conviennent particulièrement bien comme constituants d'un catalyseur de craquage catalytique, lequel renferme ainsi en poids

(a) 50 à 95% d'au moins une matrice choisie dans le groupe constitué par les silice alumines, les silices

magnésies et les argiles, avec éventuellement à titre additionnel dans ladite matrice au moins un autre solide choisi dans le groupe constitué par les alumines, les silices, les zircones, l'alumine oxyde de bore, les magnésies, l'oxyde de titane,

(b) 5 à 50% d'une zéolithe, renfermant en outre éventuellement un ou plusieurs éléments métalliques couramment utilisés dans les catalyseurs de craquage, en particulier les métaux de la famille des terre-rares, le catalyseur selon l'invention pouvant également avantageusement renfermer des quantités minimes, inférieures à 1000 ppm par exemple, de rhénium ou d'un métal noble de la famille du platine (platine, palladium, iridium, osmium, rhodium, ruthénium), et/ou un autre métal (par exemple 0,01 à 5%) sous forme d'oxyde notamment, tel que le manganèse, le fer, le cobalt, le nickel, le chrome et le manganèse, etc...

Les conditions générales des réactions de craquage catalytiques sont particulièrement bien connues pour ne pas être répétées ici dans le cadre de la présente invention (voir par exemple US—A—3,293,192, US—A—3,449,070, US—A—4,415,438, US—A—3,518,051, US—A—3,607,043.

Les caractéristiques de l'invention sont précisées par quelques exemples présentés ci-après:

Exemple 1.

On utilise une zéolithe NaY de formule Na $AlO_2(SiO_2)_{2,5}$.

Cette zéolithe dont les caractéristiques sont:
rapport $SiO_2/Al_2O_3$ molaire: 5
paramètre cristalline: $24,69 \times 10^{-10}$m
Capacité d'adsorption de vapeur d'eau à 25°C (à P/Po: 0,1): 26%
Surface spécifique: 880 $m^2/g$

est soumise à cinq échanges consécutifs dans des solutions de nitrate d'ammonium de concentration 2M, à une température de 95°C, pendant une temps de 1h30, et avec un rapport volume de solution sur poids de zéolithe égal à 8. Le taux de sodium de la zéolithe $NaNH_4Y$ obtenu est 0,95%. Ce produit est ensuite introduit rapidement dans un four préchauffé à 770°C et laissé pendant 4 heures en atmosphère statique. La zéolithe est soumise ensuite à deux échanges par des solutions de nitrate d'ammonium de manière à ce que le taux de sodium descende à 0,2%. Le rapport molaire $SiO_2/Al_2O_3$ est alors de 6,3, le paramètre cristallin de $24,38 \times 10^{-10}$m, la surface de 625 $m^2/g$, la capacité de reprise en eau de 11,3% (à P/Po=0,1) et la capacité de reprise en ions sodium de 2. L'isotherme de désorption de l'azote et la répartition microporeuse sont présentés en Figure 1 où l'on a représenté en abscisses le diamètre D des pores, en Å (1Å=$10^{-10}$m) et en ordonnées le volume d'azote ($mm^3/g$). La courbe 1 représente le volume poreux V (isotherme de désorption de l'azote), la courbe 2 représente dV/dD (répartition microporeuse).

Exemple 2

La zéolithe NaY de départ est soumis aux mêmes échanges et traitements stabilisants que dans l'exemple 1. Après la stabilisation, au lieu de faire des échanges avec des ions ammonium, on procède à un traitement acide aux conditions suivantes: le rapport entre le volume d'acide nitrique 2N et le poids de solide est de 6, la température est de 95°C, et le temps de 3 heures. Ensuite un autre traitement dans les mêmes conditions est effectué, mais avec un acide de normalité 0,3N. Le rapport molaire $SiO_2/Al_2O_3$ est alors de 18, le taux de sodium résiduel de 0,2%, le paramètre cristallin de $24,32 \times 10^{-10}$m, la surface spécifique de 805 $m^2/g$, la capacité de reprise en eau de 13,7%, la capacité de reprise en ions sodium de 1,8. L'isotherme de désorption de l'azote et la répartition microporeuse sont présentés en figure 2 (mêmes définitions que pour la figure 1).

Exemple 3

La zéolithe NaY est soumise à deux échanges dans des solutions de chlorure d'ammonium de façon à ce que le taux de sodium soit de 2,6%. Le produit est ensuite introduit dans un four froid et calciné sous air jusqu'à 400°C. A cette température on introduit dans l'atmosphère de calcination un débit d'eau correspondant, après vaporisation, à une pression partielle de 50.661 Pa. La température est alors portée à 565°C pendant 2 heures. Le produit est ensuite soumis à un échange avec une solution de chlorure d'ammonium suivie d'un traitement acide très ménagé aux conditions suivantes: volume d'acide chlorhydrique 0,4N sur poids de solide de 10, temps de 3 heures. Le taux de sodium baisse alors jusqu'à 0,6%, le rapport $SiO_2/Al_2O_3$ est de 7,2. Ce produit est alors soumis à une calcination brutale en atmosphère statique à 780°C pendant 3 heures, puis à nouveau repris en solution acide par l'acide chlorhydrique de normalité 2 et un rapport volume de solution sur poids de zéolithe de 10. Le paramètre cristallin est de $24,28 \times 10^{-10}$m, la surface spécifique de 825 $m^2/g$, la capacité de reprise en eau de 11,7, la capacité de reprise en ions sodium de 1,0; la répartition poreuse de la zéolithe est présentée en figure 2.

Exemple 4

Préparation des catalyseurs A, B et C.

Les zéolithes des exemples 1, 2 et 3 sont utilisés pour préparer des catalyseurs de composition pondérale suivante:

13% zéolithe
5% NiO
18% $MoO_3$
64% alumine

L'alumine est une pseudo-boehmite obtenue par hydrolyse d'un alcoolate d'aluminium. Elle est préparée par ajoute d'acide nitrique de manière à obtenir une pâte, puis mélangée en même temps aux autres ingrédients: nitrate de nickel, heptamolybdate d'ammonium et zéolithe modifiée. Après comalaxage, le mélange est extrudé par une filière de diamètre 1,6 mm, puis séché à 120°C pendant 16 heures et calciné pendant 2 heures à 500°C, la montée en température étant de 2,5°C par minute. A la zéolithe décrite dans l'exemple 1, correspond le catalyseur A, à l'exemple 2, le catalyseur B, et à l'exemple 3, le catalyseur C.

Exemple 5

Préparation du catalyseur D

La zéolithe de l'exemple 2 est mise en forme par extrusion avec une alumine peptisée. Les extrudés sont séchés puis calcinés à 500°C. Ce support est ensuite imprégné par des solutions aqueuses de tungstate d'ammonium et de nitrate de nickel. La composition de catalyseur calciné à 500°C est la suivante: 20% zéolithe, 2,8% NiO, 21,9% $WO_3$, 55,3% d'alumine.

Exemple 6

Conditions du test.

Les catalyseurs dont les préparations sont décrites aux exemples précédents sont utilisés dans les conditions de l'hydrocraquage sur une charge dont les caractéristiques suivent:

| | | |
|---|---|---|
| charge | Point initial | 318 |
| | Point 10% | 378 |
| | Point 50% | 431 |
| | Point 90% | 467 |
| | Point final | 494 |
| | Densité $d_4^{20}$ | 0,854 |
| | N (ppm) | 980 |
| | %S | 1,92 |

L'unité de test catalytique comprend un réacteur en lit fixe monté en "up flow" où sont introduits 60 ml de catalyseur. Le catalyseur est présulfuré par un mélange $H_2/H_2S$ (97—3) jusqu'à 420°C. La pression est de 120 bar, le recyclage d'hydrogène de 1.000 litres par litre de charge, la vitesse volumique horaire de 1.

Exemple 7

Résultats.

Les catalyseurs ont été comparés à conversion voisine et donc à température différente.

La conversion est définie comme étant la fraction de la recette à point d'ébullition inférieure à 380.

La sélectivité est définie comme étant la fraction de la recette de points d'ébullition compris entre 150 et 380, ramenée à la conversion.

Les résultats sont présentés dans le tableau:

| Catalyseur | T | Conversion | Selectivite |
|---|---|---|---|
| A | 370 | 78,5 | 62,0 |
| B | 355 | 79,0 | 74,9 |
| C | 360 | 78,1 | 77,6 |
| D | 350 | 77,2 | 80,3 |

Exemple 8

Les catalyseurs A et B sont comparés dans un test basse pression sur charge assez faiblement polluée en soufre et azote. Le test s'inscrit dans une optique d'hydrocraquage à basse pression sur une charge préalablement hydrotraitée.

Un résidu sous vide de densité ($d_4^{20}$) 0,906 et de teneur en soufre 2,37% est hydrotraité à 60 bar sur un catalyseur conventionnel non acide; la recette est distillée et la coupe 295—500 est à son tour hydrocraquée sur les catalyseurs A et B à 60 bar. La charge a les caractéristiques suivants:

$d_4^{20}$=0,871
S(ppm)=500
N(ppm)=130

La pression est de 60 bar, le recyclage d'hydrogène de 700 litres d'hydrogène par litre de charge, la vitesse volumique horaire de 1. Les résultats sont portés dans le tableau suivant:

| Catalyseur | T | Conversion | Selectivite |
|---|---|---|---|
| A | 365 | 73 | 40 |
| | 350 | 55 | 63 |
| B | 350 | 75 | 55 |
| | 335 | 57 | 73 |

Exemple 9

10 g de la zéolithe HY obtenue à l'issue de l'exemple 2 sont dispersés dans une poudre de silice-alumine broyée pour obtenir un mélange à 25% poids de zéolithe (et 75% de silice alumine). Ce mélange est ensuite soumis au traitement hydrothermique destiné à diminuer son activité: 17 heurs à 750°C sous une pression partielle de 1 bar (0,1 MPa) de vapeur d'eau.

Les performances du catalyseur ainsi obtenu sont évalués dans un test de craquage en lit fixe d'un gazole sous vide dans les conditions suivantes:

Quantité de catalyseur: 4,0 g
rapport pondéral catalyseur/charge=c/o=3,0
WHSV=15 $h^{-1}$ (Weight Hour Space Velocity)
Temps de réaction ("time on stream")=75 s
Température du réacteur=480°C
Charge:
Densité à 15°C=0,904
Point d'aniline=79°C
% poids S=1,3
% poids N<0,1
Carbone Conradson% poids=0,32
Ni+V ppm<1

| | |
|---|---|
| | P.I.=202°C |
| | 10%=307°C |
| ASTM D1160 | 50%=402°C |
| | 90%=510°C |
| | P.F. — |

Les résultats obtenus sont les suivants:
% conversion=72%
rendement en essence $C_5^+$=53%
rapport $C_4^=/C_4$=1,2
coke% poids par rapport au catalyseur=2,0

Exemple 10

10 g de la zéolithe HY obtenue à l'issue de l'exemple 2 sont plongés dans 100 $cm^3$ d'une solution aqueuse 0,5 M en nitrate de lanthane pendant 2 heures à température ambiante. Le produit est ensuite lavé à l'eau distillée, séché à 150°C pendant 4 heures puis calciné 2 heures à 500°C. Il est enfin dispersé, comme dans l'exemple 9, et dans les mêmes proportions, dans une poudre de silice-alumine et soumis au même traitement hydrothermique que celui appliqué dans l'exemple 9.

Les performances du catalyseur ainsi obtenu sont évaluées dans les mêmes conditions que celles décrites dans l'exemple 9. Les résultats sont les suivantes:

% conversion=73%
rendement en essence $C_5^+$=54%
rapport $C_4^=/C_4$=1,0
coke% poids par rapport au catalyseur=2,1

Exemple 11 (comparatif)

On utilise un catalyseur industriel de craquage en lit fluide présentant les caractéristiques suivantes:

% de matrice: 75% poids (silice-alumine)
% de zéolithe: 25%
Caractéristique de la zéolithe:
Surface spécifique=148 $m^2 \cdot g^{-1}$
Volume poreux=0,31 $cm^3 \cdot g^{-1}$
(terres rares en % poids (en métaux)=1,9
$Fe_2O_3$% en poids=0,65
ABD (Apparent Bulk Density)=0,78 $g \cdot cm^{-3}$.
$Na_2O$ (% en poids)=0,33

Ce catalyseur est soumis au même traitement hydrothermique que ceux des exemples 9 et 10, puis au même test que dans ces deux exemples 9 et 10. Les résultats obtenus sont:

% conversion=68%
rendement en essence $C_5^+$=47%
rapport $C_4^=/C_4$=0,6
coke% poids par rapport au catalyseur=2,7

**Revendications**

1. Catalyseur renfermant
(a) une matrice
(b) une zéolithe caractérisée par
un rapport molaire $SiO_2/Al_2O_3$ compris entre environ 8 et 70,
une teneur en sodium inférieure à 0,15% en poids déterminée sur la zéolithe calcinée à 1100°C.
un paramètre $a_o$ de la maille élémentaire compris entre $24,55\times10^{-10}$m et $24,24\times10^{-10}$m.
une capacité $C_{Na}$ de reprise en ions sodium, exprimée en grammes de sodium par 100 grammes de zéolithe modifiée, neutralisée et calcinée supérieure à environ 0,85.
une surface spécifique supérieure à environ 400 $m^2 \cdot g^{-1}$.
une capacité d'adsorption de vapeur d'eau à 25°C supérieure à 6%. (à un rapport P/Po égal à 0,10).
une répartition poreuse comprenant entre 1 et 20% du volume poreux contenu dans des pores de diamètre situé entre $20\times10^{-10}$m et $80\times10^{-10}$m, le reste du volume poreux étant essentiellement contenu dans des pores de diamètre inférieur à $20\times10^{-10}$m.

2. Catalyseur renfermant en poids
(a) 20 à 98% d'une matrice choisie dans le groupe constitué par au moins l'alumine, la silice, la silice-alumine, l'alumine-oxyde de bore, la magnésie, la silice-magnésie, la zircone, l'oxyde de titane, l'argile,
(b) 2 à 80% d'une zéolithe selon la revendication 1,
(c) au moins un métal ou un composé de métal choisi dans le groupe constitué par les métaux nobles ou non nobles du groupe VIII de la classification périodique des éléments, la concentration en métal ou métaux nobles du groupe VIII, exprimée en poids de ce ou ces métaux, étant comprise entre 0,01 et 5%, la concentration en métal ou métaux non nobles du groupe VIII, exprimée en poids de ce ou ces métaux, étant comprise entre 0,01 et 15%.

3. Catalyseur renfermant en poids
(a) 50 à 95% d'une matrice choisie dans le groupe constitué par au moins l'alumine, la silice, la silice-alumine, l'alumine-oxyde de bore, la magnésie, la silice-magnésie, la zircone, l'oxyde de titane, l'argile,
(b) 3 à 50% d'une zéolithe caractérisée par
un rapport molaire $SiO_2/Al_2O_3$ compris entre environ 12 et 40.
une teneur en sodium inférieure à 0,15% en poids déterminée sur la zéolithe calcinée à 1100°C.
un paramètre $a_o$ de la maille élémentaire compris entre $24,38\times10^{-10}$m et $24,26\times10^{-10}$m.
une capacité $C_{Na}$ de reprise en ions sodium, exprimée en grammes de sodium par 100 grammes de zéolithe modifiée, neutralisée et calcinée supérieur à environ 0,85%.
une surface spécifique supérieure à environ 550 $m^2 \cdot g^{-1}$.
une capacité d'adsorption de vapeur d'eau à 25°C (à un rapport P/Po égal à 0,10) supérieure à 6%.
une répartition poreuse comprenant entre 3 et 15% du volume poreux contenu dans des pores de

diamètre situé entre $20\times10^{-10}$m et $80\times10^{-10}$m, le reste du volume poreux étant contenu dans des pores de diamètre inférieur à $20\times10^{-10}$m.

(c) au moins un métal ou un composé de métal choisi dans le groupe constitué par les métaux nobles ou non nobles du groupe VIII de la classification périodique des éléments, la concentration en métal ou métaux nobles du groupe VIII, exprimée en poids de ce ou ces métaux, étant comprise entre 0,03 et 3%, la concentration en métal ou métaux, non nobles du groupe VIII, exprimée en poids de ce ou ces métaux, étant comprise entre 0,05 et 10%.

4. Catalyseur selon l'une des revendications 2 à 3 dans lequel on utilise au moins un composé d'un métal du groupe VIII choisi dans le groupe constitué par le cobalt et le nickel, en association avec au moins un composé d'un métal du groupe VI de la classification périodique des éléments, la concentration totale en oxyde de métaux des groupes VIII et VI étant comprise entre 5 et 40%, le rapport pondéral (exprimé en oxydes métalliques) métal ou métaux du groupe VIII métal ou métaux du groupe VI étant compris entre 0,05 et 0,8.

5. Catalyseur selon la revendication 4 dans lequel le métal du groupe VI est le molybdène ou le tungstène, la concentration totale en oxyde de métaux des groupes VIII et VI étant comprise entre 12 et 30%, le rapport pondéral métal ou métaux du groupe VIII/métal ou métaux du groupe VI étant compris entre 0,13 et 0,5.

6. Procédé de fabrication d'un catalyseur selon l'une des revendications 2 à 5 consistant à mélanger une matrice avec une zéolithe et à introduire en une ou plusieurs étapes soit dans la matrice, soit dans la zéolithe, soit dans le mélange de matrice et de zéolithe, le ou les métaux ou composé(s) de métaux du groupe VIII et éventuellement du groupe VI, la zéolithe étant préparée à partir d'une zéolithe Y-Na ayant généralement un rapport molaire $SiO_2/Al_2O_3$ compris entre 4 et 6, un paramètre cristallin compris entre $24{,}60\times10^{-10}$m à $24{,}80\times10^{-10}$m et une surface spécifique généralement comprise entre 750 et 950 $m^2/g$ la préparation de la zéolithe consistant

à abaisser le taux de sodium de la zéolithe Y-Na à une valeur inférieure à 3% en poids par au moins un échange avec une solution d'un sel d'ammonium ionisable, de façon à obtenir une zéolithe $NH_4NaY$,

à calciner en au moins une étape la zéolithe $NH_4NaY$ (traitement hydrothermique) entre environ 500 et 850°C, sous une pression partielle de vapeur d'eau comprise entre 0,05 et 10 bar pendant au moins vingt minutes, pour obtenir un zéolithe dite stabilisée,

à traiter la zéolithe dite stabilisée en au moins une étape par au moins une solution d'un acide organique ou inorganique ou d'un agent complexant.

7. Procédé selon la revendication 6, dans lequel la préparation de la zéolithe consiste

à abaisser le taux de sodium de la zéolithe Y-Na à une valeur inférieure à 2,5% en poids par au moins un échange avec une solution d'un sel d'ammonium ionisable, de façon à obtenir une zéolithe $NH_4NaY$,

à calciner en au moins une étape la zéolithe $NH_4NaY$ (traitement hydrothermique) entre 600 et 800°C, sous une pression partielle de vapeur d'eau comprise entre 0,1 et 5 bar, pendant au moins une heure, pour obtenir une zéolithe dite stabilisée,

à traiter la zéolithe dite stabilisée en au moins une étape, par une solution d'acide chlorhydrique ou nitrique de normalité comprise entre 0,1 et 11N de préférence entre 0,5 et 3N.

8. Procédé de fabrication d'un catalyseur selon l'une des revendications 2 à 5 consistant à mélanger une matrice avec une zéolithe et à introduire en une ou plusieurs étapes soit dans la matrice, soit dans la zéolithe soit dans le mélange de matrice et de zéolithe le ou les métaux ou composé(s) de métaux du groupe VIII et éventuellement du groupe VI, la zéolithe étant préparée à partir d'une zéolithe Y-Na ayant généralement un rapport molaire $SiO_2/Al_2O_3$ compris entre 4 et 6, un paramètre cristallin voisin de $24{,}69\times10^{-10}$m et une surface spécifique généralement comprise entre 800 et 900 $m^2/g$ la préparation de la zéolithe consistant

à abaisser le taux de sodium de la zéolithe Y-Na à une valeur inférieure à 3%, de préférence 2,8%, en poids par au moins un échange avec une solution d'un sel d'ammonium considérable de façon à obtenir une zéolithe $NH_4NaY$,

à faire subir à la zéolithe $NH_4NaY$ un premier traitement hydrothermique, en au moins une étape, à une température comprise entre 500 et 700°C, sous une pression partielle de vapeur d'eau d'au moins 0,026 bar et pendant au moins vingt minutes,

à abaisser ensuite le taux de sodium à une valeur inférieure à 1% poids, de préférence inférieure à 0,7%, effectuant soit au moins un échange avec au moins une solution d'au moins un sel d'ammonium ionisable, soit un traitement avec au moins une solution d'au moins un acide organique ou inorganique, soit à la fois un échange avec au moins une solution d'au moins un sel d'ammonium ionisable et un traitement avec au moins une solution d'au moins un acide organique ou inorganique,

à faire subir ensuite à la zéolithe ainsi traitée un deuxième traitement hydrothermique, en au moins une étape, à une température comprise entre 600 et 880°C, de préférence 660 et 830°C, la température de ce deuxième traitement hydrothermique étant supérieure de 100 à 250°C environ à la température du premier traitement hydrothermique,

à traiter ensuite la zéolithe en au moins une étape par au moins une solution d'un acide organique ou inorganique ou d'un agent complexant.

9. Catalyseur renfermant en poids

(a) 50 à 95% d'une matrice choisie dans le groupe constitué par les silice-alumines, les silice magnésies et les argiles

(b) 5 à 50% d'une zéolithe définie selon la revendication 1.

10. Catalyseur selon la revendication 9 dans lequel la matrice renferme en outre au moins un autre solide choisi dans le groupe constitué par les alumines, les silices, les zircones, l'alumine oxyde de bore, les magnésies, l'oxyde de titane.

11. Catalyseur selon l'une des revendications 9 et 10 dans lequel la zéolithe renferme au moins un métal de la famille du groupe des terres rares.

12. Catalyseur selon l'une des revendications 9 à 11 renfermant en outre au moins un métal choisi dans le groupe constitué par les métaux nobles de la famille du platine, le rhénium, le manganèse, le chrome, le cobalt, le nickel, et le fer.

13. Procédé de fabrication d'un catalyseur selon l'une des revendications 9 à 12, la préparation de la zéolithe consistant

à abaisser le taux de sodium de la zéolithe Y-Na à une valeur inférieure à 3% en poids par au moins un échange avec un solution d'un sel d'ammonium ionisable, de façon à obtenir une zéolithe $NH_4NaY$,

à calciner en au moins une étape la zéolithe $NH_4NaY$ (traitement hydrothermique) entre 500 et 850°C, sous une pression partielle de vapeur d'eau comprise entre 0,05 et 10 bar pendant au moins vingt minutes, pour obtenir une zéolithe dite stabilisée,

à traiter la zéolithe dite stabilisée en au moins une étape par au moins une solution d'un acide organique ou inorganique ou d'un agent complexant.

14. Procédé de fabrication d'un catalyseur selon l'une des revendications 9 à 12, la préparation de la zéolithe consistant:

à abaisser le taux de sodium de la zéolithe Y-Na à une valeur inférieure à 2,5% en poids par au moins un échange avec une solution d'un sel d'ammonium ionisable, de façon à obtenir une zéolithe $NH_4NaY$,

à calciner en au moins une étape la zéolithe $NH_4NaY$ (traitement hydrothermique) entre 600 et 800°C, sous une pression partielle de vapeur d'eau comprise entre 0,1 et 5 bar, pendant au moins une heure, pour obtenir une zéolithe dite stabilisée,

à traiter la zéolithe dite stabilisée en au moins une étape, par une solution d'acide chlorhydrique ou nitrique de normalité comprise entre 0,1 et 11 N de préférence entre 0,5 et 3N.

15. Procédé de fabrication d'un catalyseur selon l'une des revendications 9 à 12, la préparation de la zéolithe consistant:

à abaisser le taux de sodium de la zéolithe Y-Na à une valeur inférieure à 3%, de préférence 2,8%, en poids par au moins un échange avec une solution d'un sel d'ammonium considérable de façon à obtenir une zéolithe $NH_4NaY$,

à faire subir à la zéolithe $NH_4NaY$ un premier traitement hydrothermique, en au moins une étape, à une température comprise entre 500 et 700°C, sous une pression partielle de vapeur d'eau d'au moins 0,026 bar et pendant au moins vingt minutes,

à abaisser ensuite le taux de sodium à une valeur inférieure à 1% poids, de préférence inférieure à 0,7%, effectuant soit au moins un échange avec au moins une solution d'au moins un sel d'ammonium ionisable, soit un traitement avec au moins une solution d'au moins un acide organique ou inorganique, soit à la fois un échange avec au moins une solution d'au moins un sel d'ammonium ionisable et un traitement avec au moins une solution d'au moins un acide organique ou inorganique,

à faire subir ensuite à la zéolithe ainsi traitée un deuxième traitement hydrothermique, en au moins une étape, à une température comprise entre 600 et 880°C, de préférence 660 et 830°C, la température de ce deuxième traitement hydrothermique étant supérieure de 100 à 250°C environ à la température du premier traitement hydrothermique,

à traiter ensuite la zéolithe en au moins une étape par au moins une solution d'un acide organique ou inorganique ou d'un agent complexant.

16. Utilisation d'un catalyseur selon l'une des revendications 1 à 5 ou d'un catalyseur préparé selon l'une des revendications 6 à 8, pour l'hydrocraquage de charges hydrocarbonées.

17. Utilisation d'un catalyseur selon la revendication 1 ou selon l'une des revendications 9 à 11 ou préparé selon l'une des revendications 12 à 14, pour le craquage de charges hydrocarbonées.

**Patentansprüche**

1. Katalysator enthaltend

a) eine Matrix,

b) einen Zeolithen gekennzeichnet durch

ein molares Verhältnis $SiO_2/Al_2O_3$ zwischen etwa 8 und 70,

einen Gehalt an Natrium geringer als 0,15 Gew.-%, bestimmt an dem bei 1100°C kalzinierten Zeolithen,

einen Parameter $a_0$ der elementarer Masche zwischen $24{,}55 \times 10^{-10}$m und $24{,}24 \times 10^{-10}$m,

eine Kapazität $C_{Na}$ der Aufnahme von Natriumionen, ausgedrückt in Gramm Natrium pro 100 g modifiziertem, neutralisiertem und kalziniertem Zeolithen, größer als ungefähr 0,85,

eine spezifische Oberfläche größer als etwa 400 $m^2 \cdot g^{-1}$,

eine Wasserdampfadsorptionskapazität bei 25°C von größer als 6% (bei einem Verhältnis P/Po gleich 0,10),

eine poröse Aufteilung umfassend zwischen 1 und 20% des Porenvolumens enthaltend in Poren von einem Durchmesser gelegen zwischen $20\times10^{-10}$m und $80\times10^{-10}$m, wobei der Rest des porösen Volumens im wesentlichen enthalten ist in Poren vom Durchmesser kleiner als $20\times10^{-10}$m.

2. Katalysator umfassend gewichtsmäßig

a) 20 bis 98% einer Matrix gewählt in der Gruppe bestehend aus wenigstens Aluminiumoxid, Siliciumoxid, Siliciumoxid-Aluminiumoxid, Aluminiumoxid-Boroxid, Magnesiumoxid, Siliciumoxid-Magnesiumoxid, Zirkonoxid, Titanoxid, Ton,

b) 2 bis 80% eines Zeolithen gemäß Anspruch 1,

c) wenigstens ein Metall oder eine Metallverbindung gewählt aus der Gruppe dargestellt durch die Edelmetalle oder Nicht-Edelmetalle der Gruppe VIII des Periodensystems der Elemente, wobei die Konzentration an Metall oder Edelmetall der Gruppe VIII ausgedrückt gewichtsmäßig dieses oder dieser Metalle, zwischen 0,01 und 5% liegt, wobei die Konzentration an Metall oder Nicht-Edelmetallen der Gruppe VIII ausgedrückt gewichtsmäßig dieses oder dieser Metalle zwischen 0,01 und 15% liegt.

3. Katalysator enthaltend gewichtsmäßig

a) 50 bis 95% einer Matrix gewählt aus der Gruppe darstellt durch wenigstens Aluminiumoxid, Siliciumoxid, Siliciumoxid-Aluminiumoxid, Aluminiumoxid-Boroxid, Magnesiumoxid, Siliciumoxid-Magnesiumoxid, Zirkonoxid, Titanoxid, Ton,

b) 3 bis 50% eines Zeolithen gekennzeichnet durch

ein molares Verhältnis $SiO_2/Al_2O_3$ umfassend zwischen etwa 12 und 40,

einen Gehalt an Natrium geringer als 0,15 Gew.-%, bestimmt auf dem bei 1100°C kalzinierten Zeolithen,

einen Parameter $a_0$ der elementaren Maschen umfassend zwischen $24{,}38\times10^{-10}$m und $24{,}26\times10^{-10}$m,

eine Kapazität $C_{Na}$ der Aufnahme von Natriumionen, ausgedrückt in Gramm Natrium pro 100 g modifiziertem, neutralisiertem und kalziniertem Zeolithen, größer als etwa 0,85%,

eine spezifische Oberfläche größer als etwa 550 $m^2 \cdot g^{-1}$,

eine Wasserdampfadsorptionskapazität bei 25°C (bei einem Verhältnis P/Po gleich 0,10) größer als 6%,

eine poröse Aufteilung umfassend zwischen 3 und 15% des Porenvolumens enthalten un Poren vom Durchmesser zwischen $20\times10^{-10}$m und $80\times10^{-10}$m, wobei der Rest des Porenvolumens enthalten ist in Poren von einem Durchmesser kleiner als $20\times10^{-10}$m,

c) wenigstens ein Metall oder eine Metallverbindung gewählt aus der Gruppe dargestellt durch die Edelmetalle oder Nicht-Edelmetalle der Gruppe VIII des periodischen Systems der Elemente, wobei die Konzentration an Metall oder Edelmetallen der Gruppe VII ausgedrückt gewichtsmäßig dieses oder dieser Metalle, zwischen 0,03 und 3% liegt, und die Konzentration an Metall oder Nicht-Edelmetallen der Gruppe VIII, ausgedrückt gewichtsmäßig dieses oder dieser Metalle zwischen 0,05 und 10% liegt.

4. Katalysator gemäß einem der Ansprüche 2 bis 3, in welchem man wenigstens eine Metallverbindung der Gruppe VIII verwendet, gewählt in der Gruppe dargestellt durch Kobalt und Nickel, in Verbindung mit wenigstens einer Metallverbindung der Gruppe VI des Periodensystems der Elemente, wobei die Gesamtkonzentration an Metalloxid der Gruppen VIII und VI zwischen 5 und 40% liegt, und wobei das Gewichtsverhältnis (ausgedrückt in metallischen Oxiden) Metall oder Metalle der Gruppe VIII/Metall oder Metalle der Gruppe VI zwischen 0,05 und 0,8 liegt.

5. Katalysator gemäß Anspruch 4, in welchem das Metall der Gruppe VI Molybdän oder Wolfram ist, wobei die Gesamtkonzentration an Metalloxiden der Gruppen VIII und VI zwischen 12 und 30% liegt, wobei das Gewichtsverhältnis Metall oder Metalle der Gruppe VIII zu Metall oder Metallen der Gruppe VI zwischen 0,13 und 0,5 liegt.

6. Verfahren zur Herstellung eines Katalysators gemäß einem der Ansprüche 2 bis 5, bestehend aus einem Mischen einer Matrix mit einem Zeolithen und Einführung in einem oder mehreren Schritten entweder in die Matrix oder in den Zeolithen oder in das Gemisch von Matrix und von Zeolith, des oder der Metalle oder Metallverbindungen der Gruppe VIII und gegebenenfalls der Gruppe VI, wobei der Zeolith hergestellt wird ausgehend von einem Y-Na-Zeolith mit im allgemeinen einem molaren Verhältnis $SiO_2/Al_2O_3$ zwischen 4 und 6, einem kristallinen Parameter zwischen $24{,}60\times10^{-10}$m bis $24{,}80\times10^{-10}$m und einer spezifischen Oberfläche im allgemeinen zwischen 750 und 950 $m^2/g$, wobei die Herstellung des Zeolithen besteht aus

Reduzierung des Gehaltes an Natrium des Y-Na-Zeolithen auf einen Wert geringer als 3 Gew.-% durch wenigstens einen Austausch mit einer Lösung eines ionisierbaren Ammoniumsalzes, dergestalt zum Erhalten eines $NH_4NaY$-Zeolithen,

Kalzinierung in wenigstens einer Stufe des $NH_4NaY$-Zeolithen (hydrothermische Behandlung) zwischen etwa 500 und 850°C unter einem Partiel-Wasserdampfdruck zwischen 0,05 und 10 bar während wenigstens 20 Minuten zum Erhalten eines genannten stabilisierten Zeolithen,

Behandlung des genannten stabilisierten Zeolithen in wenigstens einer Stufe mit wenigstens einer Lösung einer organischen oder anorganischen Säure oder eines Komplexierungsmittels.

7. Verfahren gemäß Anspruch 6, in welchem die Herstellung des Zeolithen besteht aus

Reduzierung des Natriumgehaltes des Y-Na-Zeolithen auf einen Wert geringer als 2,5 Gew.-% durch

wenigstens einen Austausch mit einer Lösung eines ionisierbaren Ammoniumsalzes, dergestalt zum Erhalten eines $NH_4NaY$-Zeolithen,

Kalzinierung in wenigstens einer Stufe des $NH_4NaY$-Zeolithen (hydrothermische Behandlung) zwischen 600 und 800°C, unter einem partiellen Wasserdampfdruck zwischen 0,1 und 5 bar, während wenigstens einer Stunde, zum Erhalten eines genannten stabilisierten Zeolithen,

Behandlung des genannten stabilisierten Zeolithen in wenigstens einer Stufe, durch eine Lösung von Salzsäure oder Salpetersäure einer Normalität zwischen 0,1 und 11 N, vorzugsweise zwischen 0,5 und 3N.

8. Verfahren der Herstellung eines Katalysators gemäß einem der Ansprüche 2 bis 5, bestehend aus Mischen einer Matrix mit einem Zeolithen und Einführung in einer oder mehreren Stufen, entweder in die Matrix, oder in den Zeolithen, oder in das Gemisch von Matrix und Zeolith, des oder der Metalle oder Metallverbindungen der Gruppe VIII und gegebenenfalls der Gruppe VI, wobei der Zeolith hergestellt wird ausgehend von einem Y-Na-Zeolithen von im allgemeinen einem molaren Verhältnis des $SiO_2/Al_2O_3$ zwischen 4 und 6, einem kristallinen Parameter in der Nähe von $24{,}69\times10^{-10}$m und einer spezifischen Oberfläche im allgemeinen zwischen 800 und 900 $m^2/g$, wobei die Herstellung des Zeolithen besteht aus

Reduzierung des Natriumgehaltes des Y-Na-Zeolithen auf einen Wert kleiner als 3, vorzugsweise 2,8 Gew.-% durch wenigstens einen Austausch mit einer Lösung eines Ammoniumsalzes im wesentlichen dergestalt zum Erhalten eines $NH_4NaY$-Zeolithen,

Unterwerfen des $NH_4NaY$-Zeolithen einer ersten hydrothermischen Behandlung, in wenigstens einer Stufe, bei einer Temperatur zwischen 500 und 700°C, unter einem Wasserdampfpartialdruck von wenigstens 0,026 bar und während 20 Minuten,

anschließender Reduzierung des Natriumgehaltes auf einen Wert kleiner als 1 Gew.-%, vorzugsweise kleiner als 0,7 Gew.-% durch wenigstens einen Austausch bewirkt mit wenigstens einer Lösung wenigstens eines ioniserbaren Ammoniumsalzes oder eine Behandlung mit wenigstens einer Lösung wenigstens einer organischen oder anorganischen Säure, oder Durchführung eines Austausches mit wenigstens einer Lösung wenigstens eines ionisierbaren Ammoniumsalzes und einer Behandlung mit wenigstens einer Lösung wenigstens einer organischen oder anorganischen Säure,

anschließender Unterwerfung des so behandelten Zeolithen unter eine zweite hydrothermische Behandlung, in wenigstens einer Stufe, bei einer Temperatur zwischen 600 und 880°C, vorzugsweise 660 und 830°C, wobei die Temperatur dieser zweiten hydrothermischen Behandlung von 100 bis 250°C größer ist als die Temperatur der ersten hydrothermischen Behandlung,

anschließender Behandlung des Zeolithen in wenigstens einer Stufe durch wenigstens eine Lösung einer organischen oder anorganischen Säure oder eines Komplexierungsmittels.

9. Katalysator enhaltend gewichtsmäßig

a) 50 bis 95% einer Matrix gewählt in der Gruppe bestehend aus Siliciumoxid-Aluminiumoxid, Siliciumoxid-Magnesiumoxid und Tonen,

b) 5 bis 50% eines Zeolithen gemäß Anspruch 1.

10. Katalysator gemäß Anspruch 9, in welchem die Matrix außerdem enthält: wenigstens einen anderen Festoff, gewählt in der Gruppe bestehend aus Aluminiumoxid, Siliciumoxid, Zirkonoxid, Aluminiumoxid-Boroxid, Magnesiumoxid, Titanoxid.

11. Katalysator gemäß einem der Ansprüche 9 und 10, in welchem der Zeolith wenigstens ein Metall der Gruppe der Familie der seltenen Erden umfaßt.

12. Katalysator gemäß einem der Ansprüche 9 bis 11, umfassend außerdem wenigstens ein Metall gewählt in der Gruppe bestehend aus den Edelmetallen der Platinfamilie, des Rheniums, des Mangans, des Chroms, des Kobalts, des Nickels und des Eisens.

13. Verfahren zur Herstellung eines Katalysators gemäß einem der Ansprüche 9 bis 12, wobei die Herstellung des Zeolithen besteht aus

Reduzierung des Natriumgehaltes des Y-Na-Zeolithen auf einen Wert kleiner als 3 Gew.-% durch wenigstens einen Austausch mit einer Lösung eines ionisierbaren Ammoniumsalzes, dergestalt zum Erhalt eines $NH_4NaY$-Zeolithen,

Kalzinierung in wenigstens einer Stufe des $NH_4NaY$-Zeolithen (hydrothermische Behandlung) zwischen 500 und 850°C, unter einem wasserdampfpartialdruck zwischen 0.05 und 10 bar während wenigstens 20 Minuten, zum Erhalt eines genannten stabilisierten Zeolithen,

Behandlung des genannten stabilisierten Zeolithen in wenigstens einer Stufe durch wenigstens eine Lösung einer organischen oder anorganischen Säure oder eines Komplexierungsmittels.

14. Verfahren zur Herstellung eines Katalysators gemäß einem der Ansprüche 9 bis 12, wobei die Herstellung des Zeolithen besteht aus

Reduzierung des Natriumgehaltes des Y-Na-Zeolithen auf einen Wert kleiner als 2,5 Gew.-% durch wenigstens einen Austausch mit einer Lösung eines ionisierbaren Ammoniumsalzes, dergestalt zum Erhalt eines $NH_4NaY$-Zeolithen,

Kalzinierung in wenigstens einer Stufe des $NH_4NaY$-Zeolithen (hydrothermische Behandlung) zwischen 600 und 800°C, unter einem Wasserdampfpartialdruck zwischen 0,1 und 5 bar, während wenigstens 1 Stunde, zum Erhalt eines genannten stabilisierten Zeolithen,

Behandlung des genannten stabilisierten Zeolithen in wenigstens einer Stufe mit einer Lösung von Chlorwasserstoffsäure Salpetersäure einer Normalität zwischen 0,1 und 11N, vorzugsweise zwischen 0,5 und 3N.

15. Verfahren zur Herstellung eines Katalysators gemäß einem der Ansprüche 9 bis 12, wobei die Herstellung des Katalysators besteht aus

Reduzierung des Natriumgehaltes des Y-Na-Zeolithen auf einen Wert weniger als 3, vorzugsweise 2,8 Gew.-% durch wenigstens einen Austausch mit einer Lösung eines Ammoniumsalzes, dergestalt zum Erhalt eines $NH_4NaY$-Zeolithen,

Unterwerfung des $NH_4NaY$-Zeolithen einer ersten hydrothermischen Behandlung, in wenigstens einer Stufe, bei einer Temperatur 500 und 700°C, unter einem Wasserdampfpartialdruck von wenigstens 0,026 bar und während wenigstens 20 Minuten,

anschließender Reduzierung des Natriumgehaltes auf einen Wert kleiner als 1 Gew.-%, vorzugsweise kleiner als 0,7 Gew.-%, durchgeführt durch entweder wenigstens einen Austausch mit wenigstens einer Lösung wenigstens eines ionisierbaren Ammoniumsalzes, oder Behandlung mit wenigstens einer Lösung wenigstens einer organischen oder anorganischen Säure, oder Bewirkung des Austausches mit wenigstens einer Lösung wenigstens eines ionisierbaren Ammoniumsalzes und einer Behandlung mit wenigstens einer Lösung wenigstens einer organischen oder anorganischen Säure,

anschließender Unterwerfung des so behandelten Zeolithen einer zweiten hydrothermischen Behandlung, in wenigstens einer Stufe, bei einer Temperatur zwischen 600 und 880°C vorzugsweise 660 und 830°C, wobei die Temperatur dieser zweiten hydrothermischen Behandlung um 100 bis 250°C größer is als die Temperatur der ersten hydrothermischen Behandlung,

anschließender Behandlung des Zeolithen in wenigstens einer Stufe durch wenigstens eine Lösung einer organischen oder anorganischen Säure oder eines Komplexierungsmittels.

16. Verwendung eines Katalysators gemäß einem der Ansprüche 1 bis 5 oder eines Katalysators hergestellt gemäß einem der Ansprüche 6 bis 8, zur Hydro-Crackung von Kohlenwasserstoffchargen.

17. Verwendung eines Katalysators gemäß Anspruch 1 oder gemäß einem der Ansprüche 9 bis 11 oder hergestellt gemäß einem der Ansprüche 12 bis 14, zur Crackung von Kohlenwasserstoffchargen.

**Claims**

1. Catalyst containing

(a) a matrix

(b) a zeolite comprising:

a molar ratio of $SiO_2/Al_2O_3$ comprise between about 8 and 70,

a sodium content below 0.15% by weight determined on the zeolite calcined at 1100°C

a parameter $a_0$ of the elementary mesh comprised between $24.55\times10^{-10}$m and $24{,}24\times10^{-10}$m.

a sodium ion take up capacity $C_{Na}$, expressed in grams of sodium per 100 grams of zeolite modified, neutralised and calcined, higher than about 0.85.

a specific surface area higher than about 400 $m^2 \cdot g^{-1}$

a water vapor adsorption capacity at 25°C higher than 6% (at a P/Po ratio equal to 0.10).

a pore distribution comprising between 1 and 20% of the pore volume contained in pores of diameter situated between $20\times10^{-10}$m and $80\times10^{-10}$m, the remainder of the pore volume being essentially contained in pores of diameter less than $20\times10^{-10}$m.

2. Catalyst containing by weight

(a) about 20 to 98% of a matrix selected from the group constituted by at least alumina, silica, silica-alumina, alumina boron oxide, magnesia, silica-magnesia zirconia, titanium oxide, clay,

(b) about 2 to 80% of a zeolite according to Claim 1,

(c) at least one metal or one metal compound selected form the group constituted by the noble or non noble metals of group VIII of the periodic classification of the elements, the concentration of noble metal or metals of group VIII expressed by weight of this or these metals, being comprised between 0.01 and 5%, the concentration of nonnoble metal or metals of group VIII, expressed by weight of this or these metals, being comprised between 0.01 and 15%.

3. Catalyst containing by weight

(a) about 50 to 95% of a matrix selected from the group constituted by at least alumina, silica, silica-alumina, alumina boron oxide, magnesia, silica-magnesia zirconia, titanium oxide, clay,

(b) about 3 to 50% of a zeolite characterised by

a molar ratio $SiO_2/Al_2O_3$ comprised between about 12 and 40.

a sodium content less than 0.15% by weight determined on the zeolite calcined at 1100°C

a parameter $a_0$ of the elementary mesh comprised between $24.38\times10^{-10}$ m and $24.26\times10^{-10}$m.

a sodium ion take-up capacity $C_{Na}$, expressed in grams of sodium per 100 grams of zeolite modified, neutralized and calcined higher than about 0.85%.

a specific surface higher than about 550 $m^2 \cdot g^{-1}$

a water vapor adsorption capacity at 25°C (at a P/Po ratio equal to 0.10) higher than 6%.

a pore distribution comprising between 3 and 15% of the pore volume contained cf pores of a diameter situated between $20\times10^{-10}$m and $80\times10^{-10}$m, the remainder of the pore volume being contained in pores of a diameter less than $20\times10^{-10}$m.

(c) at least one metal or metal compound selected from the group constituted by noble or non noble metal of group VIII of the periodic table of the elements, the concentration of noble metal or metals of

group VIII expressed by weight of this or these metals, being comprised between 0.03 and 3%, the concentration of non noble metal or metals of group VIII, expressed by weight, being comprised between 0.05 and 10%.

4. Catalyst according to Claim 2 or 3 in which at least one compound of a metal of group VIII, selected from the group constituted by cobalt and nickel is used, in association with at least one compound of a metal of group VI of the periodic classification of the elements the total concentration of oxide of metals of groups VIII and VI being comprised between 5 and 40%, the ratio by weight (expressed in metal oxides) metal or metal of group VIII metal or metals of group VI being comprised between 0.05 and 0.8.

5. Catalyst according to Claim 4 wherein the metal of group VI is molybdenum or tungsten, the total concentration of oxide of metals of groups VIII and VI being comprised between 12 and 30%, the ratio by weight of metal or metals of group VIII/metal or metals of group VI being comprised between 0.13 and 0.5.

6. Method of manufacturing a catalyst according to one of Claims 2 to 5 consisting of mixing a matrix with a zeolite and introducing in one or several steps either into the matrix, or into the zeolite, or into the mixture of matrix and zeolite, one or more metals or compounds of metals of group VIII and as the case may be of group VI, the zeolite being prepared from Y-Na zeolite having generally a molar ratio $SiO_2/Al_2O_3$ comprised between about 4 and 6, a crystalline parameter comprised between $24.60\times10^{-10}$m and $24.80\times10^{-10}$m and a specific surface generally comprised between 750 and 950 $m^2/g$ approximately, the preparation of the zeolite consisting

of lowering the sodium level of the Y-zeolite to a value below 3% by weight by at least one exchange with a solution of an ionisable ammonium salt, so as to obtain an $NH_4NaY$ zeolite,

of calcining in at least one step the NH NaY zeolite (hydrothermic treatment) between about 500 and 850°C, at a partial water vapor pressure comprised between about 0.05 and 10 bar for at least 20 minutes to obtain a so-called stabilised zeolite,

and treating the so-called stabilised zeolite in at least one step by at least one solution of an organic or inorganic acid or of a complexing agent.

7. Process according to Claim 6 in which the preparation of the zeolite consists

of lowering the sodium ratio of the Y-Na zeolite to a value below 2.5% by weight by at least one exchange with a solution of an ionisable ammonium salt, so as to obtain an $NH_4NaY$ zeolite,

of calcining in at least one step the NH NaY zeolite (hydrothermic treatment) between about 600 and 800°C, at a partial water vapor pressure comprised between 0.1 and 5 bar, for at least 1 hour, to obtain a so-called stabilised zeolite,

of treating the so-called stabilised zeolite in at least one step, by a hydrochloric or nitric acid solution of normality comprised between 0.1 and 11N preferably between 0.5 and 3N.

8. Method of manufacturing a catalyst according to one of Claims 2 to 5 consisting of mixing the matrix with a zeolite and of introducing in one or several steps either into the matrix, or into the zeolite, or into the mixture of matrix and zeolite one or more metals or compound(s) or metals of group VIII and as the case may be of group VI, the zeolite being prepared form a Y-Na zeolite generally having a molar ratio $SiO_2/Al_2O_3$ comprised between about 4 and 6, a crystalline parameter close to $24.69\times10^{-10}$m and a specific surface generally comprised between 800 and 900 m/g approximately, the preparation of the zeolite consisting

of lowering the sodium ratio of the Y-Na zeolite to a value below 3%, preferably 2.8% by weight by at least one exchange with a solution of an ammonium salt so as to obtain an $NH_4NaY$ zeolite,

of subjecting the $NH_4NaY$ zeolite to a first hydrothermic treatment, in at least one step, at a temperature comprised between 500 and 700°C, at a partial water vapor pressure of at least 0.026 bar and for at least 20 minutes,

of then lowering the sodium ratio to a value below 1% by weight, preferably below 0.7% performing either at least one exchange in at least one solution of at least one ionisable ammonium salt, or a treatment with at least one solution of at least one organic or inorganic acid, or at the same time one exchange with at least one solution of at least one ionisable ammonium salt and a treatment with at least one solution of at least one organic or inorganic acid,

then subjecting the thus treated zeolite to a second hydrothermic treatment, in at least one step, at a temperature comprised between 600 and 880°C, preferably 660 and 830°C, the temperature of this second hydrothermic treatment being 130 to 250°C approximately above the temperature of the first hydrothermic treatment,

and then treating the zeolite in at least one step by at least one organic or inorganic acid solution or solution of complexing agent.

9. Catalyst containing by weight

(a) 50 to 95% of a matrix selected from the group constituted by silica-aluminas, silica-magensias and clays

(b) 5 to 50% of a zeolite according to Claim 1.

10. Catalyst according to Claim 9, wherein the matrix contains in addition at least one other solid selected from the group constituted by aluminas, silicas, zirconias, alumina boron oxide, magnesias, titanium oxide.

11. Catalyst according to Claim 9 or 10 wherein the zeolite contains at least one metal of the family of the rare earth group.

12. Catalyst according to one of Claims 9 to 11 containing in addition at least one metal selected from

the group constituted by the noble metals of the family of platinum, rhenium, manganese, chromium, cobalt, nickel, and iron.

13. Process for manufacturing a catalyst according to one of Claims 9 to 12, the preparation of the zeolite consisting

of lowering the sodium ratio of the Y-NaY zeolite to a value below 3% by weight, by at least one exchange with a solution of an ionisable ammonium salt so as to obtain an $NH_4NaY$ zeolite,

of calcining in at least one step the $NH_4Na$ zeolite (hydrothermic treatment) between about 500 and 850°C, at a partial water vapor pressure comprised between about 0.05 and 10 bar for at least 20 minutes, to obtain a so-called stabilised zeolite,

of treating the so-called stabilised zeolite in at least one step in at least one solution of organic or inorganic acid or of a complexing agent.

14. Process for manufacturing the catalyst according to one of Claims 9 to 12, the preparation of the zeolite consisting:

of lowering the sodium ratio of the Y-Na zeolite to a value below 2.5% by weight by at least one exchange with a solution of an ionisable ammonium salt, so as to obtain and $NH_4NaY$ zeolite,

of calcining in at least one step the NH NaY zeolite (hydrothermic treatment) between about 600 and 800°C, under a partial water vapor pressure comprised between about 0.1 and 5 bar, for at least one hour, to obtain a so-called stabilised zeolite,

of treating the so-called stabilised zeolite in at least one step, by a hydrochloric or nitric acid solution of normality comprised between 0.1 and 11N preferably between 0.5 and 3N.

15. Process for manufacturing the catalyst according to one of Claims 9 to 12, the preparation of the zeolite consisting:

of lowering the sodium ratio of the Y-Na zeolite to a value below 3%, preferably 2.8%, by weight, by at least one exchange with a solution of an ionisable ammonium salt so as to obtain an $NH_4NaY$ zeolite,

of subjecting the NH NaY zeolite to a first hydrothermic treatment, in at least one step, at a temperature comprised between 500 and 700°C, und a partial water vapor pressure of at least 0.026 bars and for at least 20 minutes,

of then lowering the sodium ratio to a value below 1% by weight, preferably below 0.7%, forming either at least one exchange with at least one solution of at least one ionisable ammonium salt, or a treatment with at least one solution of at least one organic or inorganic acid, or both an exchange with at least one solution of at least one ionisable ammonium salt and a treatment of at least one solution of at least one organic or inorganic acid,

then subjecting the thus treated zeolite to a second hydrothermic treatment, in at least one step, at a temperature comprised between 600 and 880°C, preferably 660 and 830°C, the temperature of this second hydrothermic treatment being higher by from 130 to 250°C approximately than the temperature of the first hydrothermic treatment,

and then treating the zeolite in at least one step with at least one solution of an or inorganic acid or of a complexing agent.

16. Process for the hydrocracking of hydrocarbon charges using a catalyst according to one of Claims 1 to 5 or a catalyst prepared according to one of Claims 6 to 8.

17. Process for cracking hydrocarbon charges comprising using a catalyst according to Claim 1 or a catalyst according to one of Claims 9 to 11 or prepared according to one of Claims 12 to 14.

FIG.1

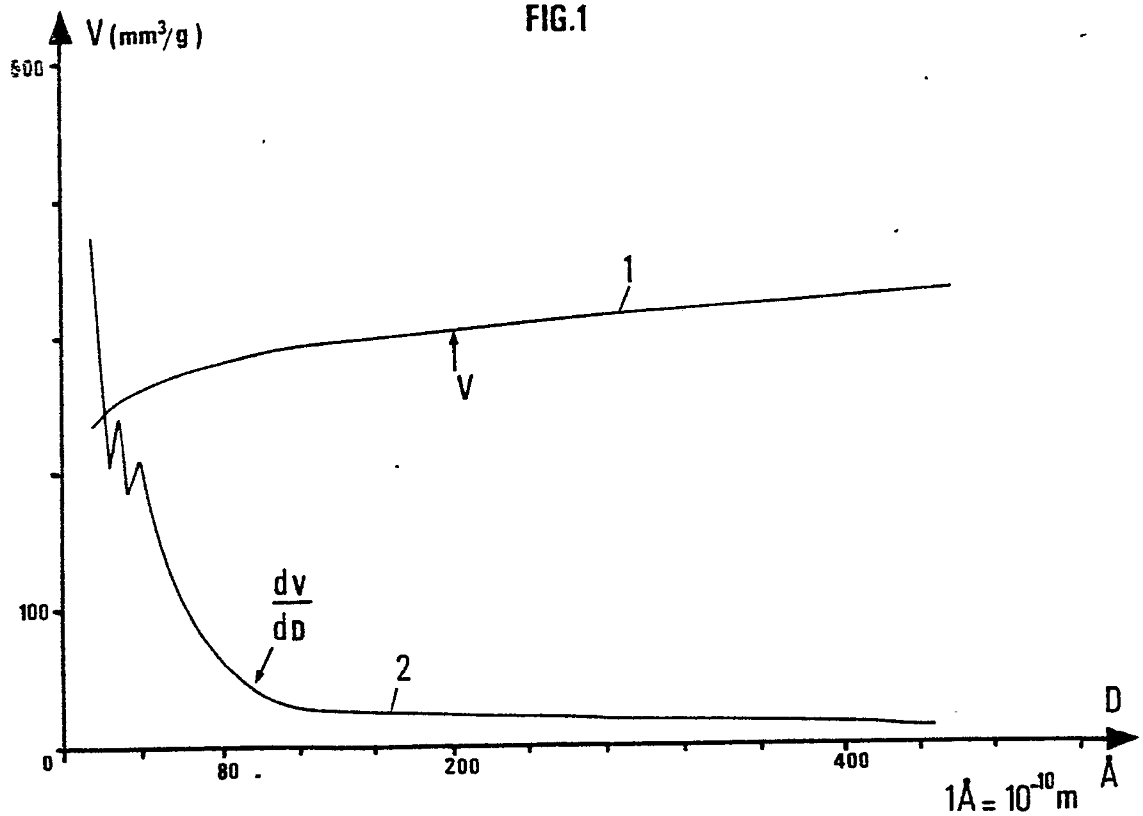
V (mm³/g)
500
100
0
1
V
dv/dD
2
D
80
200
400
Å
1Å = 10⁻¹⁰m

FIG.2

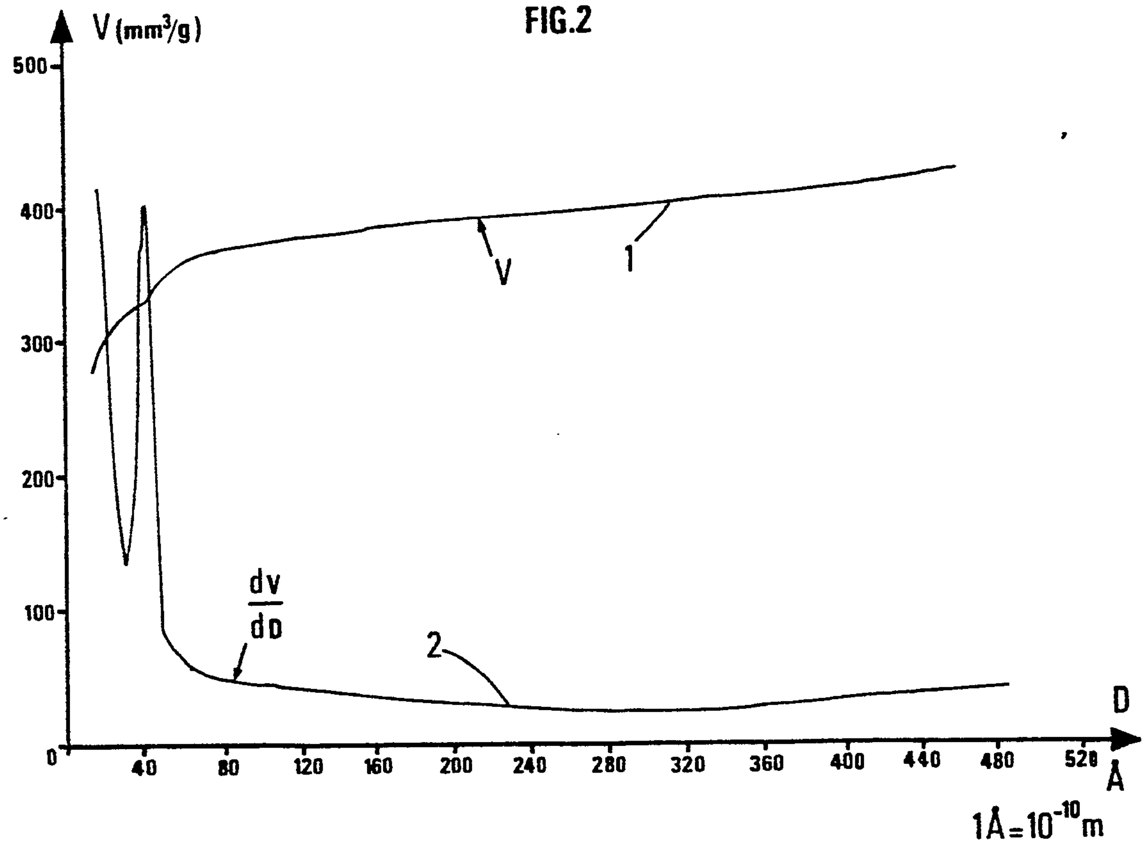
V (mm³/g)
500
400
300
200
100
0
V
1
dv/dD
2
D
40
80
120
160
200
240
280
320
360
400
440
480
528
Å
1Å = 10⁻¹⁰m